# EUROPEAN PATENT APPLICATION

(11) **EP 4 811 224 A1**
(43) Date of publication of application: **23.09.2026**
(21) Application number: 26160245.2
(22) Date of filing: 24.02.2026
(51) Int. Cl.: G06N 10/40

(54) **COMBINED MEASUREMENT READOUT AT QUANTUM COMPUTING SYSTEM**

(30) Priority: 17.03.2025 US 202563773384 P; 26.06.2025 US 202519250565
(71) Applicant: Microsoft Technology Licensing, LLC, Redmond, WA 98052-6399 (US)
(72) Inventor: DANDACHI, Tareq El, Redmond, 98052-6399 (US); ZHENG, Guoji, Redmond, 98052-6399 (US)
(74) Representative: Page White Farrer

(57) **Abstract**

A quantum computing system (1) including a quantum computing device (10) that includes a plurality of qubits (14). The quantum computing system further includes a qubit interface (34) including a readout circuit (100). The readout circuit is configured to collect a qubit measurement readout (40) of one or more of the plurality of qubits. The qubit measurement readout further includes a signal-frequency readout (42) collected at a signal frequency (*fₛ*) and an idler-frequency readout (44) collected at an idler frequency (*fᵢ*). The quantum computing system further includes a classical computing device (18) configured to receive the qubit measurement readout from the readout circuit. The classical computing device is further configured to compute a weighted sum (50) based at least in part on the signal-frequency readout and the idler-frequency readout. The classical computing device is further configured to output a combined measurement readout of an observable (52) of the one or more qubits, as indicated by the weighted sum.

## Description

### BACKGROUND

At a quantum computing device, data is stored and processed using qubits, which encode that data in their quantum states. A classical computing device is used as a controller to provide input control signals to the qubits and receive measurement results obtained by measuring the quantum states of the qubits. A readout circuit is included in the quantum computing system to convert the measurements obtained at the qubits into a form that is usable by the controller. This readout circuit may filter and amplify the raw measurement signals obtained from qubit measurements.

### SUMMARY

According to one aspect of the present disclosure, a quantum computing system is provided, including a quantum computing device that includes a plurality of qubits. The quantum computing system further includes a qubit interface including a readout circuit. The readout circuit is configured to collect a qubit measurement readout of one or more of the plurality of qubits. The qubit measurement readout further includes a signal-frequency readout collected at a signal frequency and an idler-frequency readout collected at an idler frequency. The quantum computing system further includes a classical computing device configured to receive the qubit measurement readout from the readout circuit. The classical computing device is further configured to compute a weighted sum based at least in part on the signal-frequency readout and the idler-frequency readout. The classical computing device is further configured to output a combined measurement readout of an observable of the one or more qubits, as indicated by the weighted sum.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 schematically shows an example configuration of a quantum computing system including a quantum computing device, a qubit interface, and a classical computing device, according to one example embodiment.
FIG. 2 schematically shows an example readout circuit included in the qubit interface of the quantum computing system, according to the example of FIG. 1.
FIG. 3A schematically shows a simplified representation of the readout circuit of FIG. 2.
FIG. 3B schematically shows the readout circuit of FIG. 3A along with respective waveforms of the signal tone and idler tone at different points in the readout circuit.
FIG. 4 schematically shows the quantum computing system when the classical computing device is configured to compute a combined measurement readout, according to the example of FIG. 3A.
FIG. 5 schematically shows a frequency layout including example values of the signal, pump, and idler frequences for respective components of the quantum computing device, according to the example of FIG. 3A.
FIG. 6A schematically shows the quantum computing system when the classical computing device is configured to select a pump frequency and compute an idler frequency during calibration of the readout circuit, according to the example of FIG. 4.
FIG. 6B schematically shows the quantum computing system when the classical computing device is configured to compute a weighting factor and a scaling prefactor during calibration of the readout circuit, according to the example of FIG. 6A.
FIG. 7 shows an example plot of respective density values for examples of a first measurement and a second measurement as functions of measurement output value, according to the example of FIG. 1.
FIGS. 8A-8B show example plots of a total signal-to-noise ratio (SNR) as a function of the SNR of the second measurement, according to the example of FIG. 7.
FIG. 9 schematically shows the quantum computing system when the classical computing device is configured to compute a phase offset, according to the example of FIG. 4.
FIG. 10 shows an example plot of a theoretical calibration curve for the readout circuit, according to the example of FIG. 9.
FIG. 11 schematically shows a frequency layout including values of the signal frequency, the pump frequency, and the idler frequency in an example measurement setup, according to the example of FIG. 3A.
FIG. 12 schematically shows an example readout circuit configured to collect measurement readouts at a second quantum dot, according to the example of FIG. 11.
FIG. 13A shows a flowchart of a method for use with a quantum computing system to obtain a combined measurement readout of an observable of one or more qubits, according to the example of FIG. 1.
FIGS. 13B-13H show additional steps of the method of FIG. 13A that may be performed in some examples.
FIG. 14 shows a schematic view of an example computing environment in which the quantum computing system of FIG. 1 may be instantiated.

### DETAILED DESCRIPTION

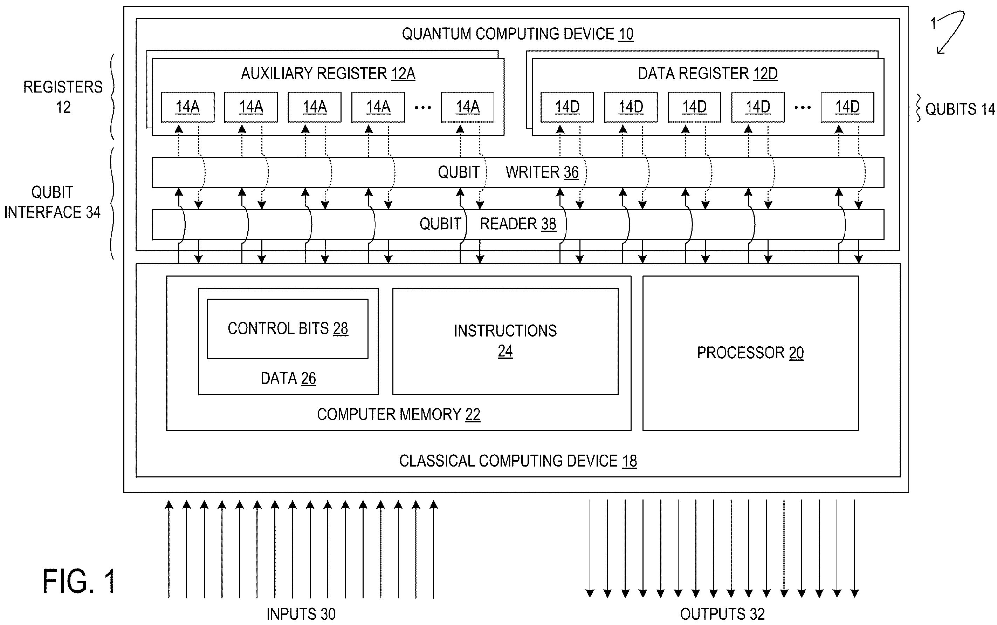

FIG. 1 schematically shows an example quantum computing system 1 including a quantum computing device 10 and a classical computing device 18. The quantum computing device 10 is configured to execute quantum-logic operations. Whereas conventional computer memory holds digital data in an array of bits and enacts bit-wise logic operations, a quantum computer holds data in an array of qubits and operates quantum-mechanically on the qubits in order to implement the desired logic. Accordingly, the quantum computing device 10 of FIG. 1 includes a set of qubit registers 12-e.g., data register 12D and auxiliary (or "ancillary") register 12A. Each qubit register includes a series of qubits 14, with the data register 12D including a plurality of data qubits 14D and the auxiliary register 12A including a plurality of auxiliary qubits 14A. The number of qubits 14 in a qubit register is not particularly limited but may be determined based on the complexity of the quantum logic to be enacted by the quantum computing device 10. The qubits 14 shown in FIG. 1 may be Majorana-based topological qubits. Alternatively, other types of qubits 14 may be used in the quantum computing device 10.

The quantum computing system 1 includes a classical computing device 18 configured as a controller of the quantum computing device 10. The classical computing device 18 may include at least one processor 20 and associated computer memory 22. The processor 20 may be coupled operatively to peripheral componentry, such as network componentry, to enable the quantum computing device 10 to be operated remotely. The processor 20 may take the form of a central processing unit (CPU), a graphics processing unit (GPU), or the like. Multiple physical processing devices may be included in the processor 20.

The computer memory 22 may be configured to hold program instructions 24 that cause the processor 20 to execute any function or process of the classical computing device 18. The computer memory 22 may also be configured to hold additional data 26. In some examples, data 26 may include a register of classical control bits 28 that influence the operation of the quantum computing device 10 during runtime-e.g., to provide classical control input to one or more quantum-gate operations. The classical computing device 18 may include control componentry operable at low or cryogenic temperatures. In such examples, the low-temperature control componentry may be coupled operatively to interface componentry operable at normal temperatures.

The classical computing device 18 is configured to receive a plurality of inputs 30 and to provide a plurality of outputs 32. The inputs 30 and outputs 32 may each comprise digital and/or analog lines. At least some of the inputs 30 and outputs 32 are data lines through which data is provided to and/or extracted from quantum computing device 10. Other inputs 30 are control lines via which the operation of the quantum computing device 10 may be adjusted or otherwise controlled.

The classical computing device 18 is operatively coupled to qubit registers 12 via a qubit interface 34. The qubit interface 34 is further configured to exchange signals bidirectionally with the qubit registers 12 and the classical computing device 18. Such signals may, for example, include electrical, magnetic, and/or optical signals. Via signals conveyed through the qubit interface 34, the classical computing device 18 may interrogate and otherwise influence the quantum state held in any, some, or all of the qubit registers 12, as defined by the collective quantum state of the qubits therein. To that end, the qubit interface 34 includes qubit writer 36 and qubit reader 38. The qubit writer 36 is configured to output a signal to one or more qubits 14 of a qubit register 12 based on write-data received from the classical computing device 18. The qubit reader 38 is configured to sense a signal from one or more qubits 14 of a qubit register 12 and to output read data to the classical computing device 18 based on the signal. The read data received from the qubit reader 38 may include an estimate of an observable of the quantum state held in a qubit register 12.

In some examples, suitably configured signals from qubit writer 36 may interact physically with one or more qubits 14 of a qubit register 12 to trigger measurement of the quantum state held in the one or more qubits 14. The qubit reader 38 may sense a resulting signal released by the one or more qubits 14 pursuant to the measurement and may furnish read data corresponding to the resulting signal to classical computing device 18. The measurement of the quantum-mechanical state is defined by the operator O corresponding to the observable to be measured; the result R of the measurement is guaranteed to be one of the allowed eigenvalues of O. In the quantum computing device 10, R is statistically related to the qubit register state prior to the measurement but is not uniquely determined by the qubit register state.

Pursuant to appropriate input from the classical computing device 18, the qubit interface 34 is configured to implement one or more quantum-logic gates to operate on the quantum state held in a qubit register 12. Whereas the function of each type of logic gate of a classical computer system is described according to a corresponding truth table, the function of each type of quantum gate is described by a corresponding operator matrix. The operator matrix operates on (i.e., multiplies) the complex vector representing a qubit register state and effects a specified rotation of that vector in Hilbert space.

The terms "quantum circuit" and "quantum algorithm" are used herein to describe a sequence of elementary quantum-gate and/or measurement operations executable by quantum computing device 10. A quantum circuit may be used to transform the quantum state of a qubit register 12 to effect a classical or non-elementary quantum-gate operation, for example.

Each qubit 14 of any qubit register 12 may be interrogated via the qubit interface 34 so as to reveal with confidence the standard basis vector |0〉 or |1〉 that characterizes the quantum state of that qubit 14. However, errors sometimes occur in the measurements of the quantum states of physical qubits.

Radio frequency (RF) readout devices are used in many quantum computing device configurations. For example, RF readout devices are used with measurement-based topological qubits. Such qubits can be formed, for example, in semiconductor-superconductor heterostructures that host Majorana zero modes (MZMs). The native operations of such qubits are single- and two-qubit measurements, which are performed using RF techniques such as dispersive gate sensing (DGS). The error rates of these qubits are therefore in part set by the performance of the readout, in particular the signal-to-noise ratio (SNR). Increasing the SNR can therefore significantly increase qubit performance.

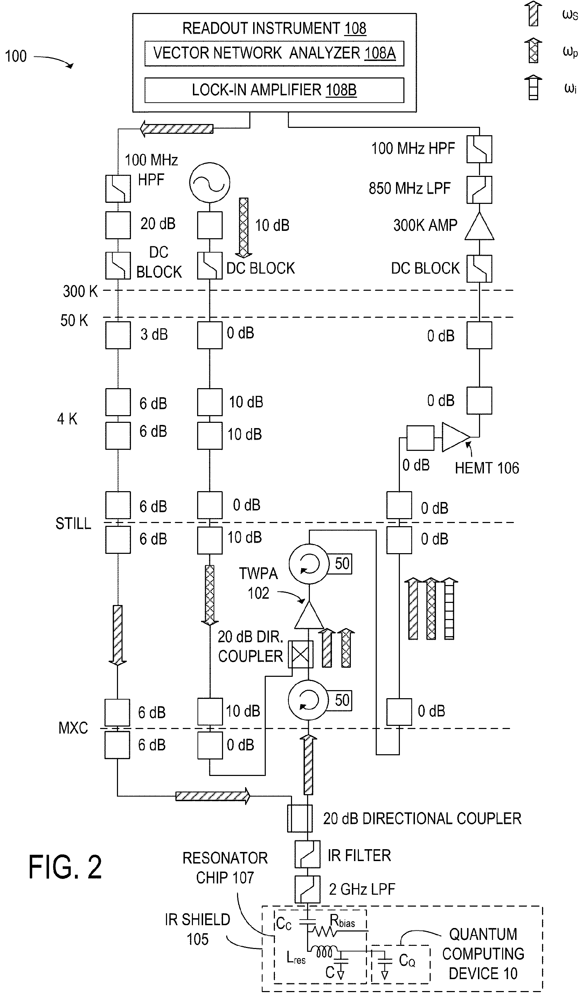

FIG. 2 schematically shows an example readout circuit 100 coupled to the quantum computing device 10. This readout circuit 100 may be used as the qubit reader 38 of FIG. 1. When performing various types of RF measurements (e.g., dispersive gate sensing for qubit readouts), a nonlinear amplifier that utilizes higher-order mixing processes may be used to amplify the readout signal. The readout circuit 100 shown in FIG. 2 includes a traveling-wave parametric amplifier (TWPA) 102. For example, the TWPA 102 may be a Josephson TWPA (JTWPA) that uses four-wave-mixing (4WM) processes to amplify the readout signal.

The readout circuit 100 shown in FIG. 2 includes a plurality of additional components. As shown in the example of FIG. 2, the quantum computing device 10 is coupled to a resonator chip 107. In addition, the quantum computing device 10 and the resonator chip 107 are located within an infrared (IR) shield 105. The readout circuit 100 further includes a high-electron-mobility transistor (HEMT) 106 and a readout instrument 108. The readout instrument 108 may include a vector network analyzer 108A and a lock-in amplifier 108B. In addition, the readout circuit 100 includes a plurality of additional filters, including an IR filter, a plurality of low-pass filters (LPFs), and a plurality of high-pass filters (HPFs). The readout circuit 100 further includes an additional amplifier, a plurality of directional couplers, and a plurality of direct current (DC) blocks.

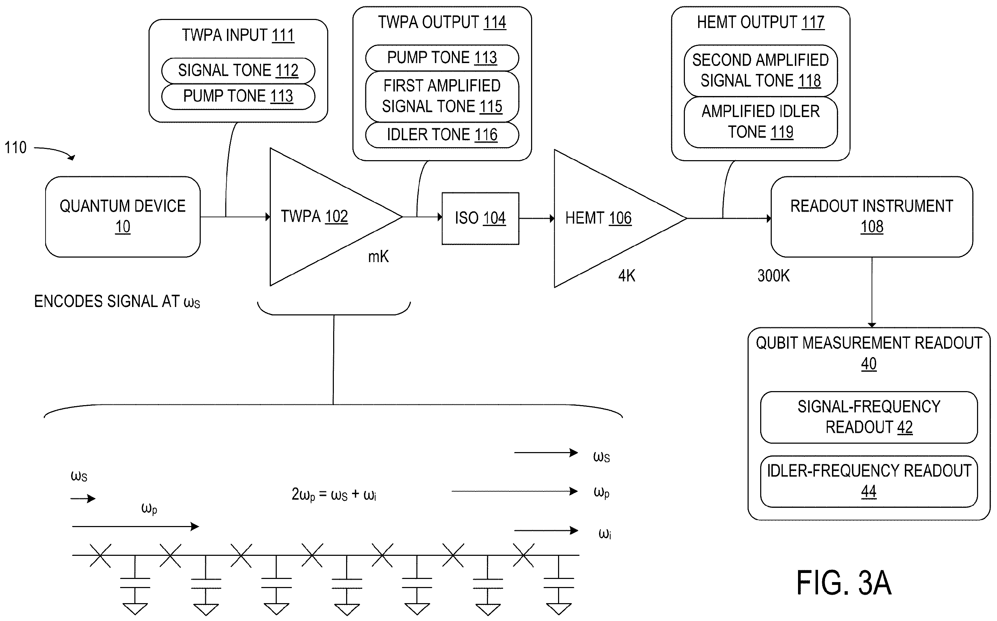

FIG. 3A schematically shows a readout circuit 110 as a simplified representation of the readout circuit 100. In addition, FIG. 3A schematically shows the frequencies of the tones received and emitted by the TWPA 102. The TWPA 102 receives a TWPA input 111 including a signal tone 112 to be amplified (which has the qubit readout frequency) and a pump tone 113 that is used to provide the energy for amplification. The TWPA 102 then outputs a TWPA output 114 including the pump tone 113 and a first amplified signal tone 115, along with an idler tone 116 at a predefined frequency. For example, in a 4WM process, the idler tone 116 has an idler frequency given by *fᵢ =* 2*fₚ - fₛ,* where *fₚ* is the pump tone frequency and *fₛ* is the signal frequency. (The above equation may alternatively be expressed in terms of angular frequencies as *ωᵢ* = 2*ωₚ* - *ωₛ*.)

The readout circuit 110 shown in the example of FIG. 3A further includes the HEMT 106 and an isolation stage 104 located between the TWPA 102 and the HEMT 106. The HEMT 106 is configured to receive the first amplified signal tone 115 and the idler tone 116 from the TWPA 102. The HEMT 106 is further configured to output an HEMT output 117 including a second amplified signal tone 118 and an amplified idler tone 119.

The readout instrument 108 is configured to receive the second amplified signal tone 118 and the amplified idler tone 119 from the HEMT 106 and is further configured to measure the signal frequency *fₛ* and the idler frequencies *fᵢ*. Accordingly, the readout circuit is configured to collect a qubit measurement readout 40 of one or more of the plurality of qubits 14. The qubit measurement readout 40 includes a signal-frequency readout 42 collected at the signal frequency *fₛ* and an idler-frequency readout 44 collected at the idler frequency *fᵢ*. The readout instrument 108 is configured to compute the signal-frequency readout 122 based at least in part on the second amplified signal tone 118 and compute the idler-frequency readout 124 based at least in part on the amplified idler tone 119. The readout instrument 108 is further configured to output the signal-frequency readout 122 and the idler-frequency readout 124 to the classical computing device 18.

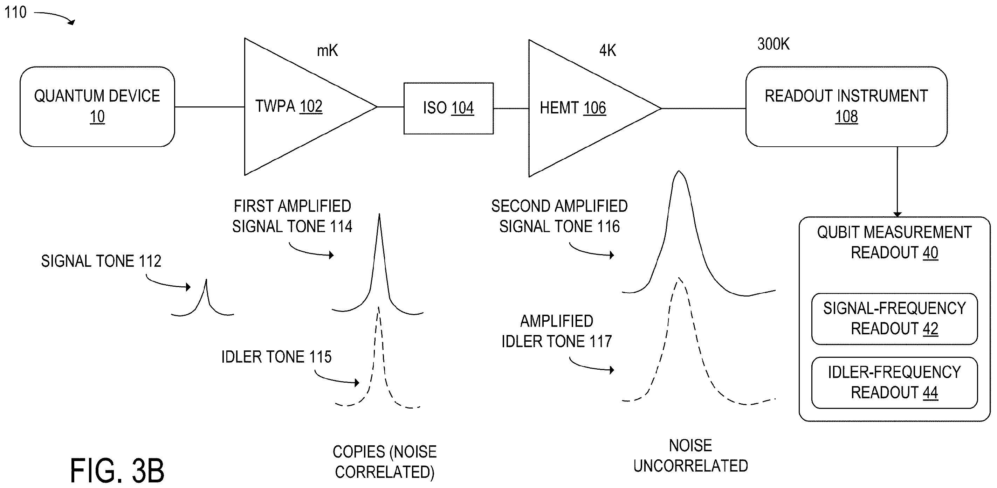

FIG. 3B schematically shows the readout circuit 110 along with respective waveforms of the signal tone 112 and idler tone 116 at different points in the readout circuit 110. The idler tone 116 generated at the TWPA 102 includes an approximate copy of the first amplified signal tone 115, with some correlated noise. As the first amplified signal tone 115 and the idler tone 116 travel through the readout circuit 110, the first amplified signal tone 115 and the idler tone 116 propagate through lossy elements and acquire added noise. This added noise is uncorrelated between the signal and idler tones.

Previous readout instruments are configured to measure the signal tone to extract information about the measured system (such as a qubit state, in the example of a topological quantum computing device). However, the inventors have recognized that additionally measuring the amplified idler tone 119 provides further information about the measured system when the noise added after the TWPA 102 is non-trivial. Measuring the amplified idler tone 119 increases the SNR of the readout circuit 100 in the following scenarios: (1) when the TWPA gain is small, and (2) when the signal-frequency SNR is much higher at a different frequency. For (1), if the TWPA gain is small (e.g. 5dB of gain), then the amount of noise added by the next amplifier (e.g., the HEMT 106) will dominate the noise of the measured signal. In such examples, the noise of the second amplified signal tone 118 and the amplified idler tone 119 is largely uncorrelated, and by measuring both an increase in the SNR of up to 40% (a factor of $\sqrt{2}$) can be achieved. Noise is predominantly introduced by the HEMT 106 in the example of FIG. 3B. In scenario (2), when the added noise of the readout circuit 110 varies greatly across its bandwidth, then the TWPA pump frequency *fₚ* can be chosen such that either the signal or idler frequency falls into a low-noise frequency regime. Measuring the amplified idler tone 119 in scenario (2) can increase the SNR by up to 2.3 times (130% increase) for some measurement cases. The systems and methods discussed herein also allow for increased flexibility in signal frequency selection, since data contributed by the amplified idler tone 119 can make up for a low SNR of the second amplified signal tone 118.

In addition to increasing the SNR of qubit measurements, the techniques discussed herein may also be used to determine noise-related properties of the readout circuit 100. For example, the systems and methods provided herein may be used when measuring a noise ratio *n_{TWPA}*/*n_{HEMT}* between noise *n_{TWPA}* introduced at the TWPA 102 and noise *n_{HEMT}* introduced at the HEMT 106. This noise ratio may be measured without heating the cryogenically cooled portions of the quantum computing system 1.

When performing an RF readout, a real or complex value of a specific variable may be measured. In other examples, such as a two-outcome quantum measurement, a binary outcome is obtained. The following discussion provides systems and methods of: (1) measuring the idler frequency to boost SNR, (2) measuring the idler frequency in order to add flexibility to the construction of readout circuits and the selection of qubit readout frequencies, and (3) combining multiple noisy intermodulation products (e.g., a signal tone and an idler tone) to acquire an RF measurement with the same units as the signal tone, but less noise.

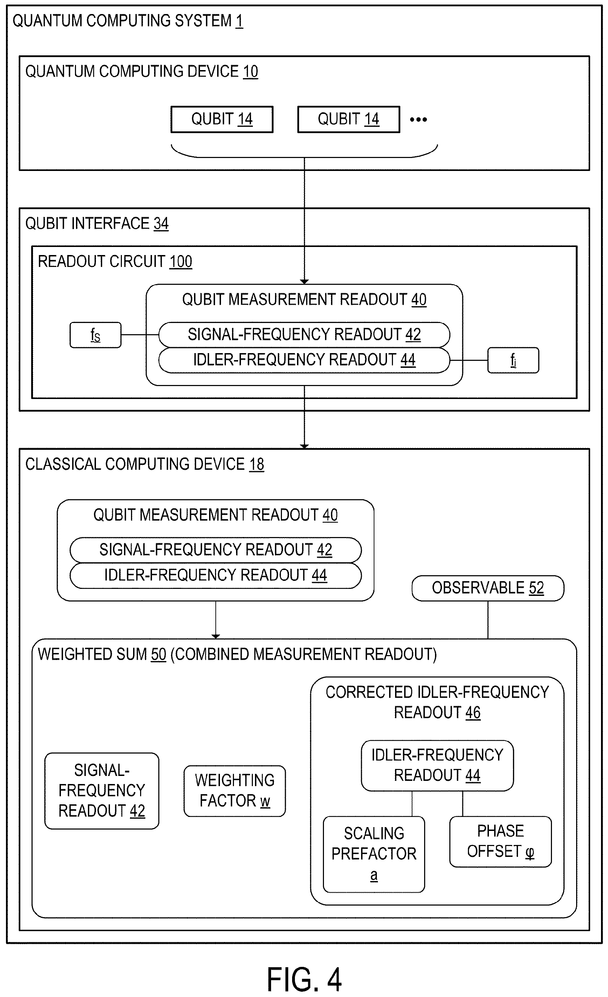

FIG. 4 schematically shows the quantum computing system 1 when the classical computing device 18 is configured to compute a combined measurement readout. According to the example of FIG. 4, the readout circuit 100 is configured to collect a qubit measurement readout 40 of one or more of the plurality of qubits 14. The one or more qubits 14 are physical qubits in this example. The qubit measurement readout 40 includes a signal-frequency readout 42 collected at the signal frequency *fₛ* and an idler-frequency readout 44 collected at the idler frequency *fᵢ*.

The classical computing device 18 is configured to receive the qubit measurement readout 40 from the readout circuit 100. The classical computing device 18 is further configured to compute a weighted sum 50 based at least in part on the signal-frequency readout 42 and the idler-frequency readout 44. In the example of FIG. 4, the weighted sum 50 is a weighted sum of the signal-frequency readout 42 and a corrected idler frequency readout 46. To compute the corrected idler frequency readout 46, the classical computing device 18 is configured to compute a scaling prefactor a and a phase offset *ϕ* between the signal-frequency readout 42 and the idler-frequency readout 44, as discussed in further detail below. The classical computing device 18 is further configured to compute the corrected idler frequency readout 46 by applying the scaling prefactor a and the phase offset *ϕ* to the idler-frequency readout 44.

The classical computing device 18 is further configured to compute a weighting factor w when computing the weighted sum 50, as discussed in further detail below. The weighting factor w is used to set the contributions of the signal-frequency term and the idler-frequency term to the weighted sum 50. For example, the weighted sum 50 may be computed according to the following equation: ${M}_{combined} = {wM}_{s} + \left(1-w\right) {aM}_{i} {e}^{- ϕ}$ In the above equation, *Mₛ* is the signal-frequency readout 42 and *Mᵢ* is the idler-frequency readout 44.

The classical computing device 18 is further configured to output a combined measurement readout of an observable 52 of the one or more qubits 14, as indicated by the weighted sum 50. The classical computing device 18 may be configured to map the value of the weighted sum 50 to a value of the observable 52, such a positive or negative parity of a joint fermionic parity operator.

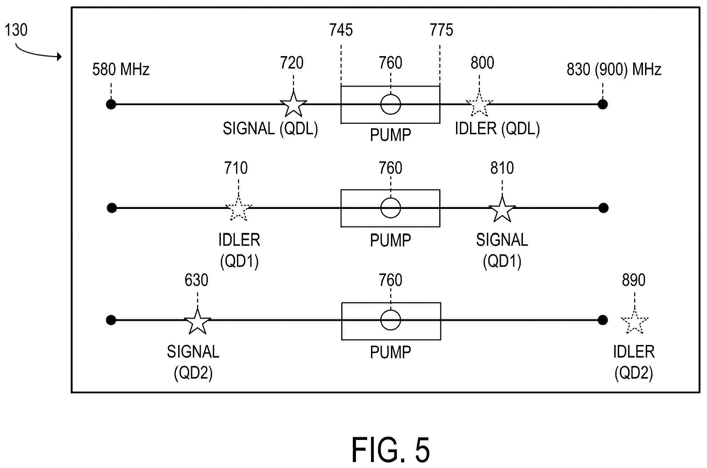

Different components included in the quantum computing device 10 may have different signal, pump, and idler frequences. FIG. 5 schematically shows a frequency layout 130 including example values of the signal, pump, and idler frequences for respective components of the quantum computing device 10. For a long quantum dot (QDL), the signal tone has a frequency of 720 MHz, the pump tone has a frequency of 760 MHz, and the idler tone has a frequency of 800 MHz. "Long quantum dot" refers here to the lowermost readout quantum dot in a Majorana tetron qubit. For a first quantum dot (QD1), the signal tone has a frequency of 810 MHz, the pump tone has a frequency of 760 MHz, and the idler tone has a frequency of 710 MHz. For a second quantum dot (QD2), the signal tone has a frequency of 630 MHz, the pump tone has a frequency of 760 MHz, and the idler tone has a frequency of 890 MHz. FIG. 5 further shows a TWPA dispersive region, which is located between 745 MHz and 775 MHz. The TWPA dispersive region is a band of frequencies within which the TWPA 102 heavily attenuates input signals.

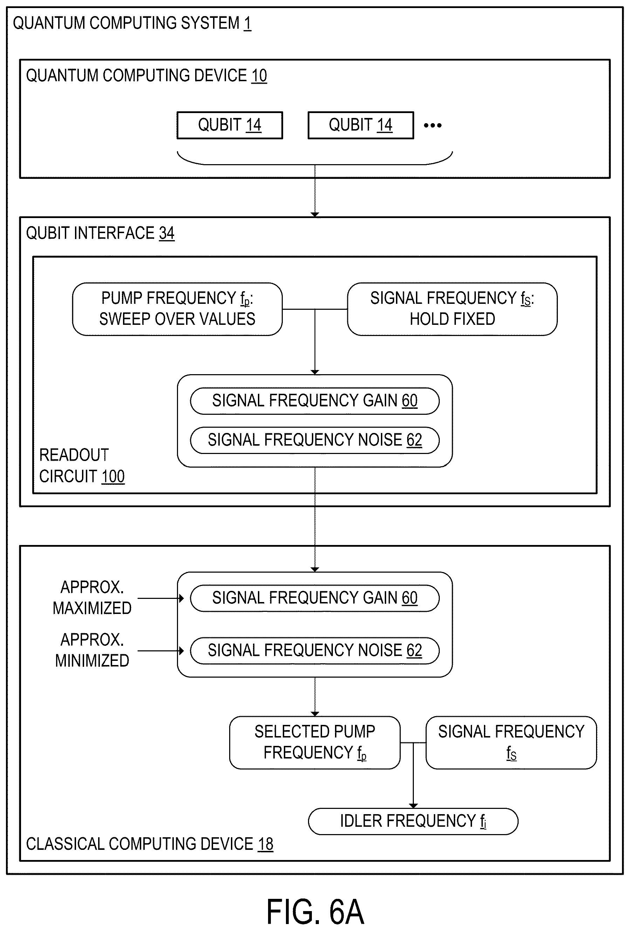

FIGS. 6A-6B schematically show the quantum computing system 1 during calibration of the readout circuit 100. In FIG. 6A, the quantum computing system 1 is shown when the classical computing device 18 is configured to select the pump frequency *fₚ* and compute the idler frequency *fᵢ*. In order to select the pump frequency *fₚ,* the classical computing device 18 is further configured to control the readout circuit 100 to sweep over a plurality of pump frequencies *fₚ* of the pump tone 113 while the signal frequency *f_{S}* of the signal tone 112 is held fixed.

The classical computing device 18 is further configured to control the readout circuit 100 to, while sweeping over the plurality of pump frequencies *fₚ,* measure a signal frequency gain 60 and a signal frequency noise 62 of the readout circuit 100 at the signal frequency *f_{S}*. For example, measuring the signal frequency gain 60 may include measuring the input and output amplitudes of the readout circuit 100 at the signal frequency *fₛ* for a corresponding value of the pump frequency *fₚ.* Measuring the signal frequency noise 62 may include measuring the output amplitude of the readout circuit 100 without inputting the signal tone 112 into the readout circuit 100.

The classical computing device 18 is further configured to output a selected pump frequency *fₚ* of the plurality of pump frequencies *fₚ* at which the signal frequency gain 60 is approximately maximized or the signal frequency noise 62 is approximately minimized. Thus, the classical computing device 18 is configured to select a pump frequency *fₚ* that results in a high SNR for the signal tone 112.

During the calibration of the readout circuit 100, the classical computing device 18 is further configured to compute the idler frequency *fᵢ* based at least in part on the signal frequency *fₛ* and the selected pump frequency *fₚ.* The classical computing device 18 may be configured to compute the idler frequency *fᵢ* using the equation *fᵢ* = 2*fₚ - fₛ.*

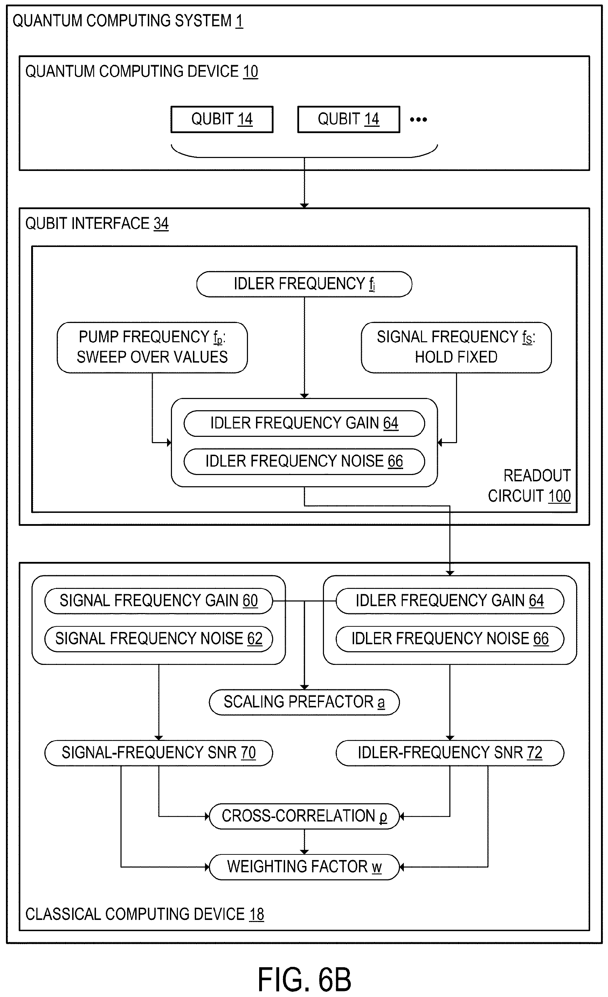

FIG. 6B schematically shows the quantum computing system 1 during calibration of the readout circuit 100 after the pump frequency *fₚ* has been selected and the idler frequency *fᵢ* has been computed. As shown in FIG. 6B, the classical computing device 18 is further configured to control the readout circuit 100 to measure an idler frequency gain 64 and an idler frequency noise 66 of the readout circuit 100 at the idler frequency *fᵢ* while sweeping over the plurality of pump frequencies *fₚ.* For example, measuring the idler frequency gain 64 may include measuring the input and output amplitudes of the readout circuit 100 at the idler frequency *fᵢ* for a corresponding value of the pump frequency *fₚ.*

As shown in FIG. 6B, the classical computing device 18 is further configured to compute a signal-frequency SNR 70 based at least in part on the signal frequency gain 60 and the signal frequency noise 62. In addition, the classical computing device 18 is further configured to compute an idler-frequency SNR 72 based at least in part on the idler frequency gain 64 and the idler frequency noise 66.

The classical computing device 18 is further configured to compute the weighting factor w of the signal-frequency readout 42 and the idler-frequency readout 44 in the weighted sum 50 based at least in part on the signal-frequency SNR 70 and the idler-frequency SNR 72. Computing the weighting factor w may include computing a cross-correlation *ρ* between the signal-frequency SNR 70 and the idler-frequency SNR 72. In addition, the classical computing device 18 may be further configured to compute the scaling prefactor a as a ratio of the signal frequency gain 60 to the idler frequency gain 64.

Additional details related to the computation of the weighting factor w are provided below. Using the weighting factor w, the classical computing device 18 may be configured to combine the signal-frequency readout 42 and the idler-frequency readout 44 by performing diversity combination. In diversity combination, noise is modeled as a multivariate gaussian distribution 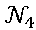 (***µ***, **Σ**), where: $μ = \left[\begin{matrix}0 \\ 0 \\ 1 \\ 1\end{matrix}\right]$ $Σ = \left[\begin{matrix}{σ}_{1}^{2} & {σ}_{1} {σ}_{2} ρ & 0 & 0 \\ {σ}_{1} {σ}_{2} ρ & {σ}_{2}^{2} & 0 & 0 \\ 0 & 0 & {σ}_{1}^{2} & {σ}_{1} {σ}_{2} ρ \\ 0 & 0 & {σ}_{1} {σ}_{2} ρ & {σ}_{2}^{2}\end{matrix}\right]$ ${σ}_{j} = \frac{1}{2 {SNR}_{j}}$

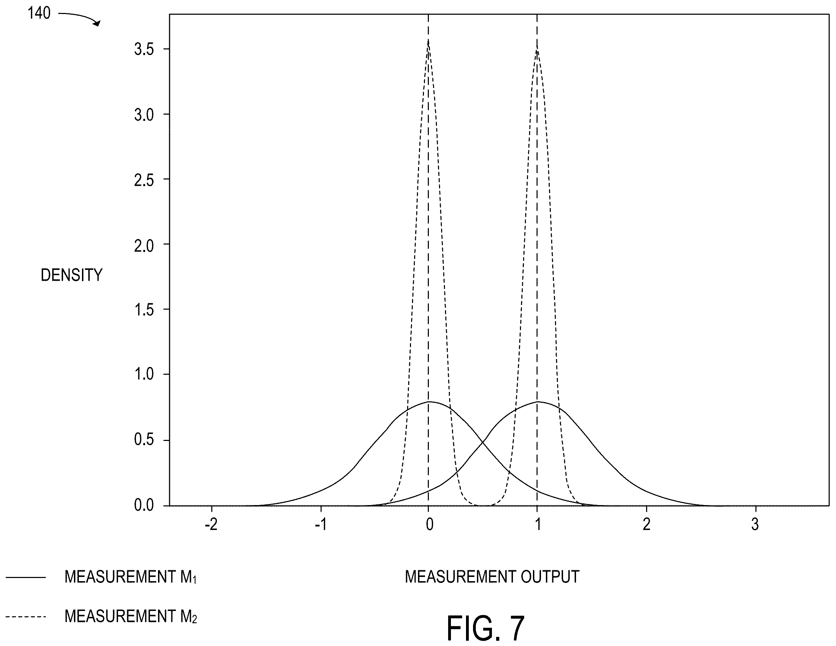

FIG. 7 shows an example plot 140 of respective density values for examples of a first measurement *M*₁ and a second measurement *M*₂ as functions of measurement output value. The first measurement *M*₁ and the second measurement *M*₂ are both performed for ground-truth measurement output values of 0 and 1 in the example of FIG. 7 but also have gaussian noise. The first measurement *M*₁ and the second measurement *M*₂ may be combined according to the following equation: $T = {wM}_{1} + \left(1-w\right) {M}_{2}$ $T ∼ N \left(0, {Σ}_{proj}\right)$ In the above equations, w is a weighting factor. The first measurement *M*₁ and the second measurement *M*₂ are accordingly combined into a measurement sampled from a gaussian distribution that has a mean of 0 and a standard deviation of Σ*ₚᵣₒⱼ.*

A solution to the following differential equation provides the weighting factor w that maximizes the SNR of the first measurement *M*₁ and the second measurement: $\frac{d {Σ}_{proj}}{dw} = 0$ The above differential equation has the following solution: $w = \frac{1 - ρ \frac{{SNR}_{2}}{{SNR}_{1}}}{1 + {\left(\frac{{SNR}_{2}}{{SNR}_{1}}\right)}^{2} - 2 ρ \frac{{SNR}_{2}}{{SNR}_{1}}}$ The value of w computed using the above equation may accordingly be used in the equation for T to achieve a maximized SNR. The maximized SNR of the combined signal may have the following simplified phenomenological form: ${SNR}_{opt} = \sqrt[p]{{SNR}_{1}^{p} + {SNR}_{2}^{p}}$ In the simplified phenomenological equation for *SNRₒₚₜ, p* is a numerically computed or empirically measured value that depends on the cross-correlation *ρ*. Accordingly, by utilizing the above equation for the weighting factor w with the signal-frequency readout 42 as *M*₁ and the idler-frequency readout 44 as *M*₂, the classical computing device 18 is configured to approximately maximize the SNR of the weighted sum 50.

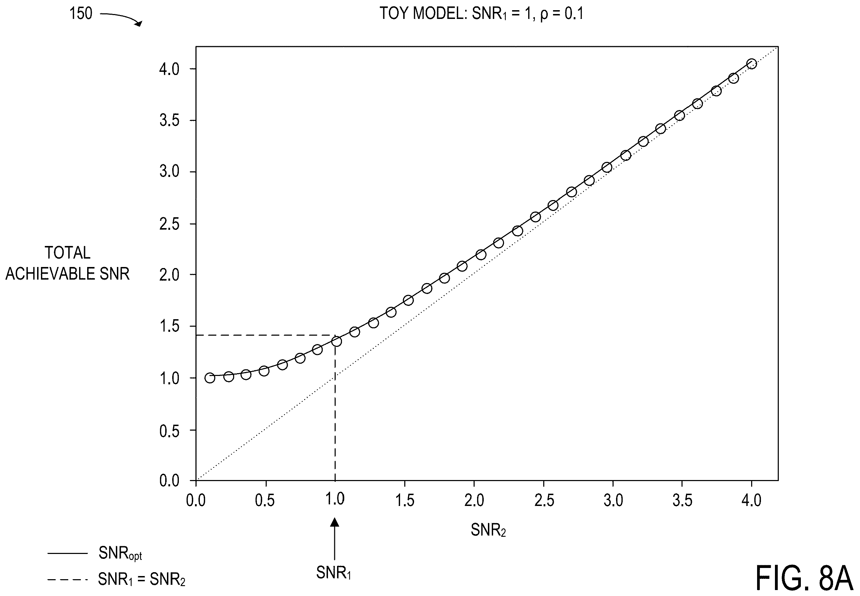

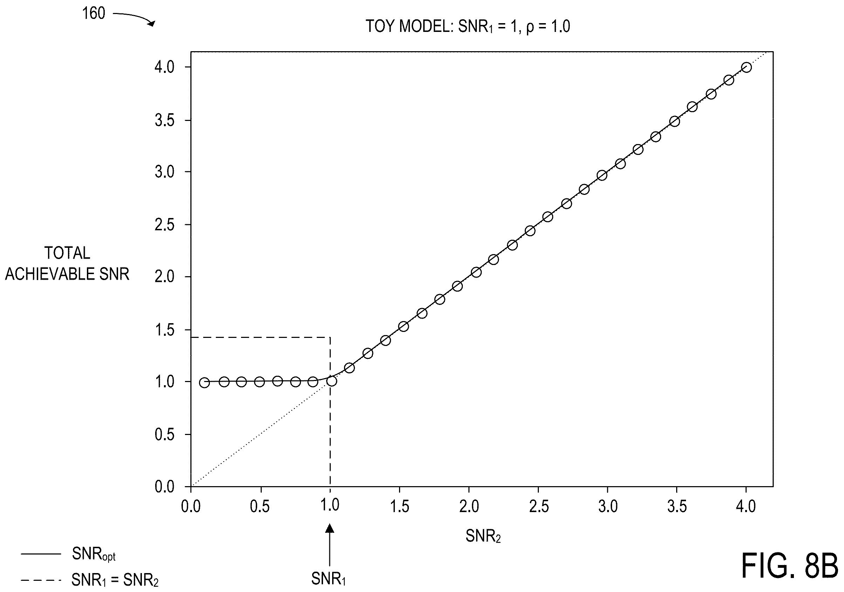

FIG. 8A shows an example plot 150 of *SNRₒₚₜ* as a function of *SNR*₂ when diversity combination is performed on a pair of measurements, as discussed above with reference to FIG. 7. In the example of FIG. 8A, *SNR*₁ is normalized to 1, and the cross-correlation *ρ* is set to 0.1. In addition, FIG. 8B shows another example plot 160 of *SNRₒₚₜ* as a function of *SNR*₂*.* In the example of FIG. 8B, the cross-correlation *ρ* is set to 1.0. As shown in both plot 150 and plot 160, ${SNR}_{opt} = \sqrt{2}$ when *SNR*₁ *= SNR*₂*.* In the example of FIG. 8A, *p* ≈ 2.3, and in the example of FIG. 8B, *p* ≈ 21.1.

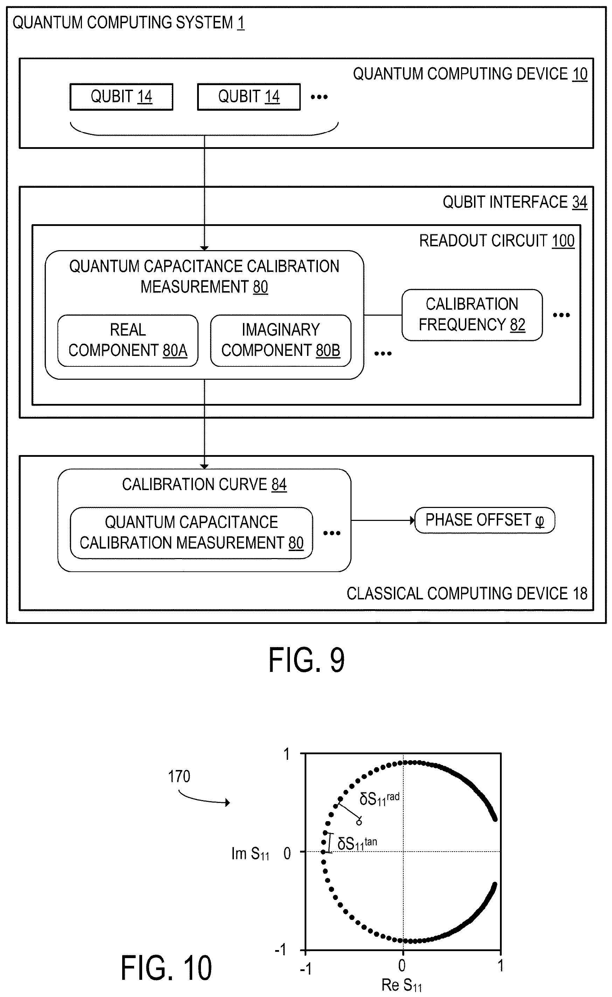

**In** addition to calibrating the signal, pump, and idler frequencies *fₛ, fₚ,* and *fᵢ*, the classical computing device 18 is further configured to perform quantum capacitance measurement calibration for the readout circuit 100. FIG. 9 schematically shows the quantum computing system 1 when this quantum capacitance measurement calibration is performed. As shown in the example of FIG. 9, the classical computing device 18 is configured to control the readout circuit 100 to collect a plurality of quantum capacitance calibration measurements 80 at a respective plurality of calibration frequencies 82. For example, each of the quantum capacitance calibration measurements 80 may include a real component 80A and an imaginary component 80B of a quantum capacitance.

The plurality of quantum capacitance calibration measurements 80 form a calibration curve 84. FIG. 10 shows an example plot 170 of a theoretical calibration curve *S*₁₁(*f*) for the readout circuit 100. In the example plot 170, respective real components 80A and imaginary components 80B are shown for a plurality of different detuning values *κ*. The measured points on the calibration curve are separated from the ideal calibration curve by respective distances ${δS}_{11}^{rad}$. The plot 170 further shows a quantity ${δS}_{11}^{tan}$, which indicates a change in the calibration curve *S*₁₁(*f*) given a small change in the resonator frequency. ${δS}_{11}^{tan}$ may be used to convert RF measurement results into units of capacitance.

Returning to FIG. 9, the classical computing device 18 is further configured to compute the phase offset *ϕ* at least in part by performing curve fitting on the quantum capacitance calibration measurements 80 included in the calibration curve 84. The phase offset *ϕ* may be computed according to the following equation: $ϕ = arg \left({aM}_{i}\right) - arg \left({M}_{s}\right)$ The phase offset *ϕ* is accordingly computed as a phase difference between the idler-frequency readout 44, scaled by the scaling prefactor a, and the signal-frequency readout 42.

Although, in the above discussion, the scaling prefactor a and the phase offset *ϕ* are computed using single values of the signal frequency gain 60, the idler frequency gain 64, the signal-frequency readout 42, and the idler-frequency readout 44, the scaling prefactor *a* and the phase offset *ϕ* may instead be computed using samples that each include a plurality of values of the signal frequency gain 60, the idler frequency gain 64, the signal-frequency readout 42, and the idler-frequency readout 44. The classical computing device 18 may accordingly be configured to compute the scaling prefactor a and the phase offset *ϕ* as average values.

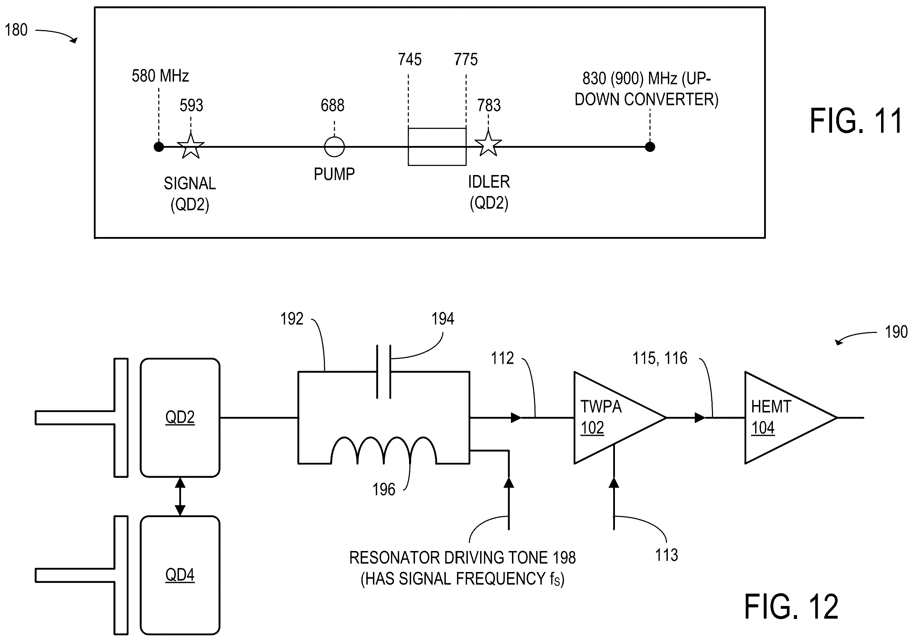

FIG. 11 schematically shows a frequency layout 180 including values of the signal frequency *fₛ,* the pump frequency *fₚ,* and the idler frequency *fᵢ* in an example measurement setup. In the example of FIG. 11, the signal frequency *fₛ* is 593 MHz, the pump frequency *fₚ* is 668 MHz, and the idler frequency *fᵢ* is 783 MHz. These frequencies are shown for a second quantum dot QD2. A TWPA dispersive region located between 745 MHz and 775 MHz is also shown in the example of FIG. 11. In addition, FIG. 11 shows frequencies of 830 MHz and 900 MHz associated with an up-down converter that may be included in the readout circuit 100 in some examples. The up-down converter may be configured to increase the frequency range of readout instrument outputs.

FIG. 12 schematically shows an example readout circuit 190 configured to collect measurement readouts at the second quantum dot QD2, according to the example of FIG. 11. The second quantum dot QD2 is coupled to a fourth quantum dot QD4 in the example readout circuit 190. For example, the second quantum dot QD2 and the fourth quantum dot QD4 may be located on the righthand side of a Majorana tetron that further includes a first quantum dot and a third quantum dot (not shown) on the lefthand side.

The readout circuit 190 further includes a resonator 192 coupled to the second quantum dot QD2. The resonator 192 is shown in simplified form in FIG. 10 as an LC circuit that includes a capacitor 194 and an inductor 196. The resonator 192 is configured to receive a resonator driving tone 198 that has the signal frequency *fₛ,* and is further configured to output the signal tone 112 to the TWPA 102. The amplitude of the signal tone 112 depends on whether the second quantum dot QD2 has a resonant frequency approximately equal to that of the resonator 192. The TWPA 102 is configured to receive the signal tone 112 and the pump tone 113 and is further configured to output the first amplified signal tone 115 and the idler tone 116 to the HEMT 106. The TWPA 102 may also output the pump tone 113 to the HEMT 106, as discussed above.

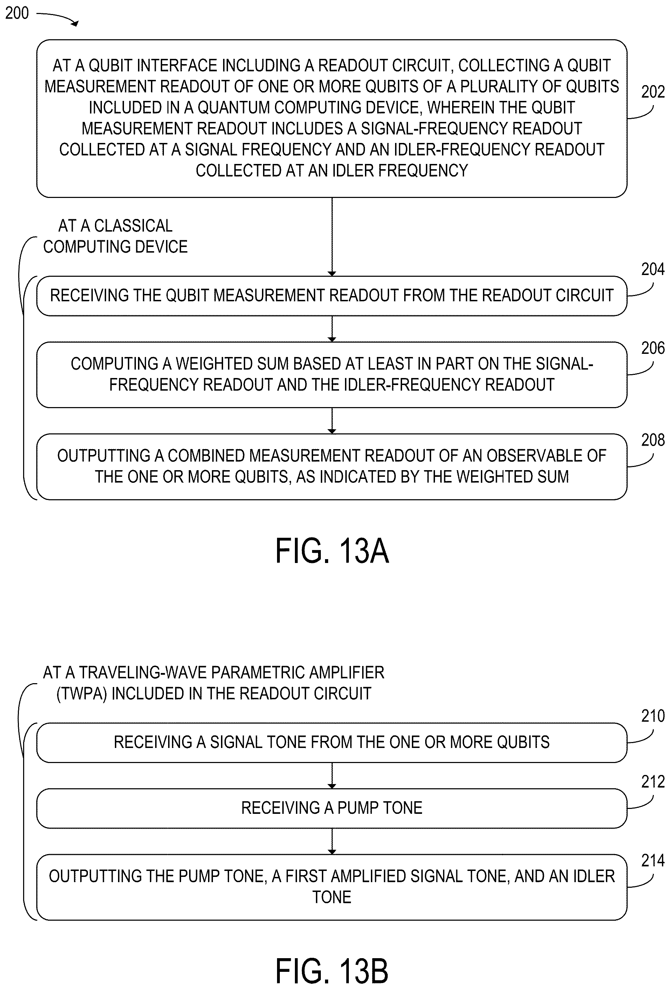

FIG. 13A shows a flowchart of a method 200 for use with a quantum computing system to obtain a combined measurement readout of an observable of one or more qubits. At step 202, the method 200 includes collecting a qubit measurement readout at a qubit interface including a readout circuit. The qubit measurement readout is obtained from one or more qubits of a plurality of qubits included in a quantum computing device. The one or more qubits are physical qubits. The qubit measurement readout may, for example, include a quantum capacitance value measured via dispersive gate sensing. The qubit measurement readout includes a signal-frequency readout collected at a signal frequency and an idler-frequency readout collected at an idler frequency. As discussed below, the signal-frequency readout may be a measurement of a second amplified signal tone, and the idler-frequency readout may be a measurement of an amplified idler tone.

Steps 204, 206, and 208 are performed at a classical computing device included in the quantum computing system. At step 204, the method 200 further includes receiving the qubit measurement readout from the readout circuit. At step 206, the method 200 further includes computing a weighted sum based at least in part on the signal-frequency readout and the idler-frequency readout. The weighted sum accordingly combines the data included in the signal-frequency readout with the data included in the idler-frequency readout in a manner that may increase the SNR of the qubit measurement readout. At step 208, the method 200 further includes outputting a combined measurement readout of an observable of the one or more qubits, as indicated by the weighted sum.

FIGS. 13B-13H show additional steps of the method 200 that may be performed in some examples. FIG. 13B shows steps that may be performed at a TWPA included in the readout circuit. At step 210, the method 200 may further include receiving a signal tone from the one or more qubits. For example, the TWPA may receive the signal tone from a resonator coupled to the one or more qubits. In such examples, the amplitude of the signal tone emitted by the resonator may indicate a qubit state. At step 212, the method 200 may further include receiving a pump tone that provides driving energy to the TWPA. The TWPA amplifies the signal tone and further generates an idler tone as a byproduct of this amplification. At step 214, the method 200 may further include outputting the pump tone, a first amplified signal tone, and the idler tone.

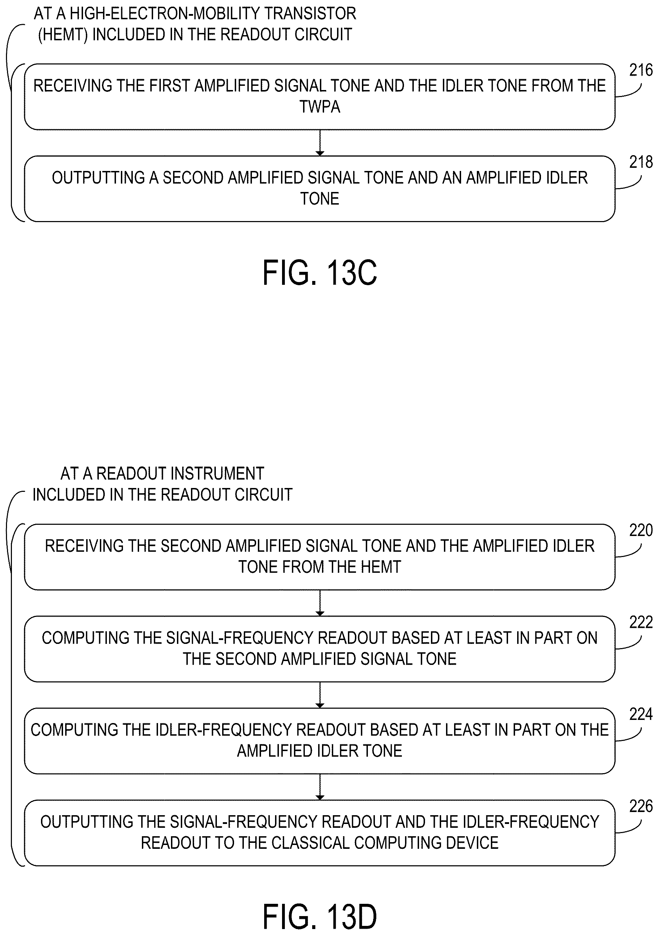

FIG. 13C shows additional steps of the method 200 that may be performed at an HEMT included in the readout circuit. At step 216, the method 200 may further include receiving the first amplified signal tone and the idler tone from the TWPA. At step 218, the method 200 may further include outputting a second amplified signal tone and an amplified idler tone. The HEMT is therefore configured to perform additional amplification on the first amplified signal tone. This additional amplification may introduce noise into both the second amplified signal tone and the amplified idler tone.

FIG. 13D shows additional steps of the method 200 that may be performed at a readout instrument included in the readout circuit. The readout instrument may be downstream of the HEMT in the readout circuit and may include a vector network analyzer and a lock-in amplifier. At step 220, the method 200 may further include receiving the second amplified signal tone and the amplified idler tone from the HEMT. The method 200 may further include, at step 222, computing the signal-frequency readout based at least in part on the second amplified signal tone. In addition, at step 224, the method 200 may further include computing the idler-frequency readout based at least in part on the amplified idler tone. At step 226, the method 200 may further include outputting the signal-frequency readout and the idler-frequency readout to the classical computing device.

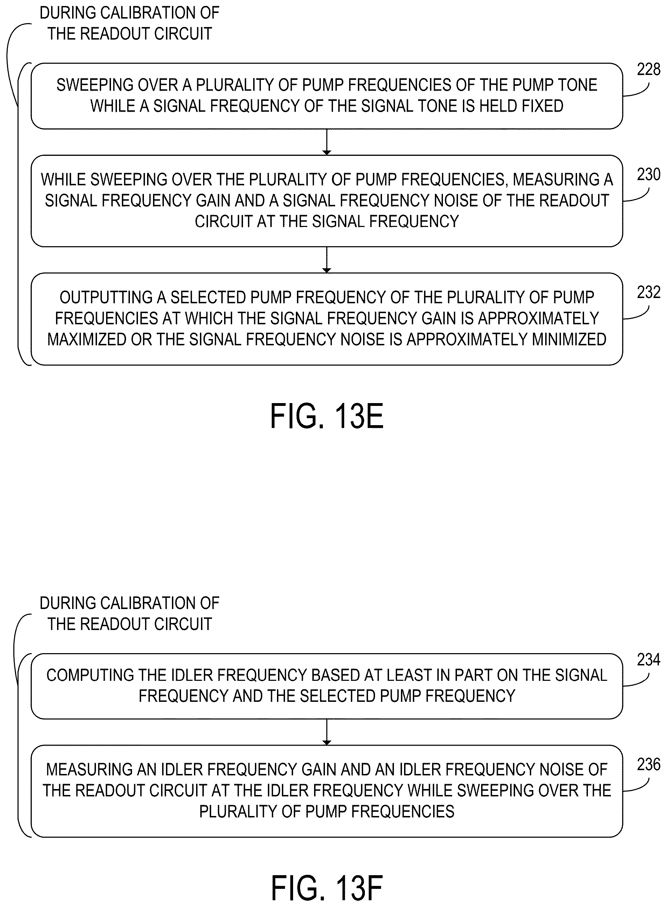

FIG. 13E shows additional steps of the method 200 that may be performed during calibration of the readout circuit. At step 228, the method 200 may further include, at the readout circuit, sweeping over a plurality of pump frequencies of the pump tone while a signal frequency of the signal tone is held fixed. At step 230, while sweeping over the plurality of pump frequencies, the method 200 may further include measuring a signal frequency gain and a signal frequency noise of the readout circuit at the signal frequency. The signal frequency gain may be measured at least in part by measuring the input and output amplitudes of the readout circuit at the signal frequency when a specific value of the pump frequency is applied to the TWPA. The signal frequency noise may be measured at least in part by measuring the output amplitude of the readout circuit at the signal frequency when the pump tone but not the signal tone is input into the TWPA. At step 232, the method 200 may further include outputting a selected pump frequency of the plurality of pump frequencies at which the signal frequency gain is approximately maximized or the signal frequency noise is approximately minimized.

FIG. 13F shows additional steps of the method 200 that may be performed during the calibration of the readout circuit subsequently to the steps of FIG. 13E. At step 234, the method 200 may further include computing the idler frequency based at least in part on the signal frequency and the selected pump frequency. At step 236, the method 200 may further include measuring an idler frequency gain and an idler frequency noise of the readout circuit at the idler frequency while sweeping over the plurality of pump frequencies. The measurement of the idler frequency gain may include measuring the input and output amplitudes of the readout circuit at the idler frequency when the selected pump frequency is applied to the TWPA. In addition, the measurement of the idler frequency noise may include measuring the amplitude of the readout circuit at the idler frequency when the pump tone but not the signal tone is input into the TWPA.

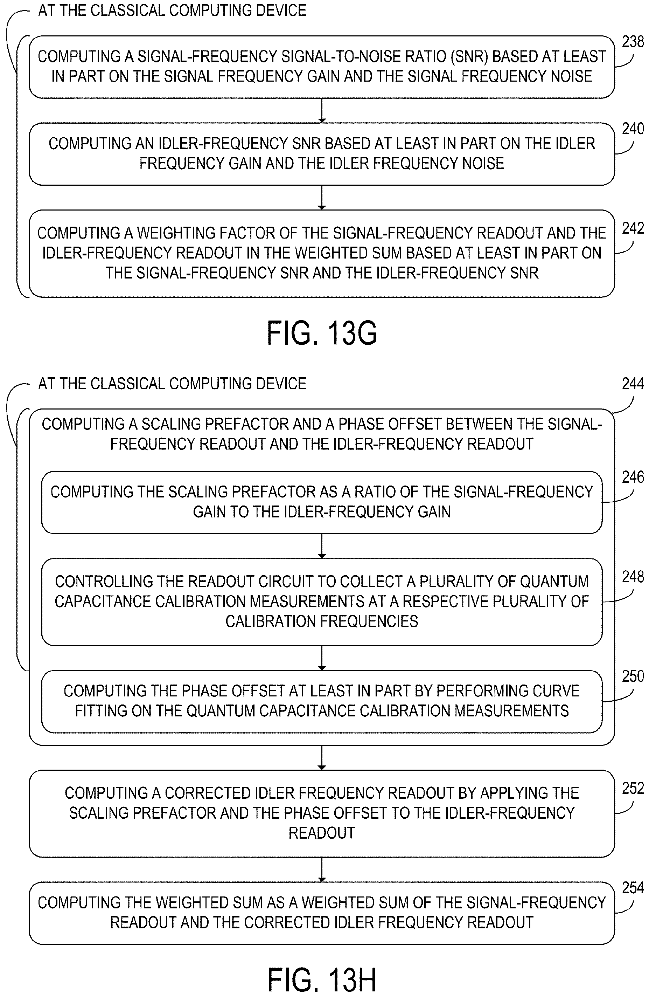

FIG. 13G shows additional steps of the method 200 that may be performed at the classical computing device during calibration of the readout circuit. At step 238, the method 200 may further include computing a signal-frequency SNR based at least in part on the signal frequency gain and the signal frequency noise. In addition, at step 240, the method 200 may further include computing an idler-frequency SNR based at least in part on the idler frequency gain and the idler frequency noise. At step 242, the method 200 may further include computing a weighting factor of the signal-frequency readout and the idler-frequency readout in the weighted sum based at least in part on the signal-frequency SNR and the idler-frequency SNR. In some examples, computing the weighting factor includes computing a cross-correlation between the signal-frequency SNR and the idler-frequency SNR.

FIG. 13H shows additional steps of the method 200 that may be performed at the classical computing device. At step 244, the method 200 may further include computing a scaling prefactor and a phase offset between the signal-frequency readout and the idler-frequency readout. Step 246 may include, at step 246, computing the scaling prefactor as a ratio of the signal-frequency gain to the idler-frequency gain. At step 248, step 244 may further include controlling the readout circuit to collect a plurality of quantum capacitance measurements at a respective plurality of calibration frequencies. At step 250, step 244 may further include computing the phase offset at least in part by performing curve fitting on the quantum capacitance calibration measurements. The curve of quantum capacitance calibration measurements may be a curve formed by the imaginary components of the quantum capacitance calibration measurements as a function of the real components, for a plurality of different detuning values.

At step 252, the method 200 may further include computing a corrected idler frequency readout by applying the scaling prefactor and the phase offset to the idler-frequency readout. Thus, the idler frequency readout may be aligned with the signal-frequency readout in both amplitude and phase. At step 254, the method 200 may further include computing the weighted sum as a weighted sum of the signal-frequency readout and the corrected idler frequency readout.

Using the measurement readout combination approach discussed above, significant increases in the SNR of qubit measurement readouts may be achieved. These increases in the SNR may be obtained without having to introduce additional hardware components into the readout circuit. In addition, since idler-frequency readouts with high SNRs still allow the weighted sum to have a high SNR even when the signal tone readout SNR is low, the techniques discussed above allow for greater flexibility in quantum computing device development by allowing a wider variety of different signal frequencies to be used.

The devices and methods discussed above may also be used in some examples to characterize the properties of the readout circuit. For example, the signal-frequency and idler-frequency readouts may allow a user to determine the proportions of the overall noise derived from the TWPA and the HEMT. The cross-correlation *ρ* may be used to compute this noise ratio *n_{TWPA}*/*n_{HEMT}.* By characterizing the noise in this manner, the amount of noise in the cryogenic components of the readout circuit may be estimated without having to warm up those cryogenic components.

The methods and processes described herein are tied to a computing system of one or more computing devices. In particular, such methods and processes can be implemented as a computer-application program or service, an applicationprogramming interface (API), a library, and/or other computer-program product.

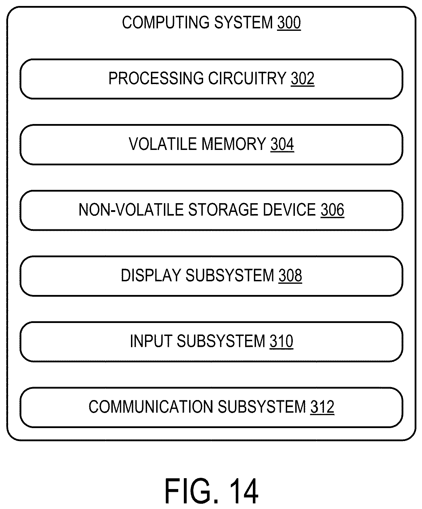

FIG. 14 schematically shows a non-limiting embodiment of a computing system 300 that can enact one or more of the methods and processes described above. Computing system 300 is shown in simplified form. Computing system 300 may embody the quantum computing system 1 described above and illustrated in FIG. 1.

Computing system 300 includes processing circuitry 302, volatile memory 304, and a non-volatile storage device 306. Computing system 300 may optionally include a display subsystem 308, input subsystem 310, communication subsystem 312, and/or other components not shown in FIG. 14.

Processing circuitry 302 typically includes one or more logic processors, which are physical devices configured to execute instructions. For example, the logic processors may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors configured to execute software instructions. Additionally or alternatively, the logic processor may include one or more hardware logic circuits or firmware devices configured to execute hardware-implemented logic or firmware instructions. Processors of the processing circuitry 302 may be single-core or multi-core, and the instructions executed thereon may be configured for sequential, parallel, and/or distributed processing. Individual components of the processing circuitry 302 optionally may be distributed among two or more separate devices, which may be remotely located and/or configured for coordinated processing. For example, aspects of the computing system 300 disclosed herein may be virtualized and executed by remotely accessible, networked computing devices configured in a cloud-computing configuration. In such a case, these virtualized aspects are run on different physical logic processors of various different machines. These different physical logic processors of the different machines will be understood to be collectively encompassed by processing circuitry 302.

Non-volatile storage device 306 includes one or more physical devices configured to hold instructions executable by the processing circuitry to implement the methods and processes described herein. When such methods and processes are implemented, the state of non-volatile storage device 306 may be transformed-e.g., to hold different data.

Non-volatile storage device 306 may include physical devices that are removable and/or built in. Non-volatile storage device 306 may include optical memory, semiconductor memory, and/or magnetic memory, or other mass storage device technology. Non-volatile storage device 306 may include nonvolatile, dynamic, static, read/write, read-only, sequential-access, location-addressable, file-addressable, and/or content-addressable devices. It will be appreciated that non-volatile storage device 306 is configured to hold instructions even when power is cut to the non-volatile storage device 306.

Volatile memory 304 may include physical devices that include random access memory. Volatile memory 304 is typically utilized by processing circuitry 302 to temporarily store information during processing of software instructions. It will be appreciated that volatile memory 304 typically does not continue to store instructions when power is cut to the volatile memory 304.

Aspects of processing circuitry 302, volatile memory 304, and nonvolatile storage device 306 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 300 typically implemented in software by a processor to perform a particular function using portions of volatile memory, which function involves transformative processing that specially configures the processor to perform the function. Thus, a module, program, or engine may be instantiated via processing circuitry 302 executing instructions held by non-volatile storage device 306, using portions of volatile memory 304. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 308 may be used to present a visual representation of data held by non-volatile storage device 306. The visual representation may take the form of a graphical user interface (GUI). As the herein described methods and processes change the data held by the non-volatile storage device 306 and thus transform the state of the non-volatile storage device 306, the state of display subsystem 308 may likewise be transformed to visually represent changes in the underlying data. Display subsystem 308 may include one or more display devices utilizing virtually any type of technology. Such display devices may be combined with processing circuitry 302, volatile memory 304, and/or non-volatile storage device 306 in a shared enclosure, or such display devices may be peripheral display devices.

When included, input subsystem 310 may comprise or interface with one or more user-input devices such as a keyboard, mouse, touch screen, camera, or microphone.

When included, communication subsystem 312 may be configured to communicatively couple various computing devices described herein with each other, and with other devices. Communication subsystem 312 may include wired and/or wireless communication devices compatible with one or more different communication protocols. As non-limiting examples, the communication subsystem 312 may be configured for communication via a wired or wireless local- or wide-area network, broadband cellular network, etc. In some embodiments, the communication subsystem 312 may allow computing system 300 to send and/or receive messages to and/or from other devices via a network such as the Internet.

The following paragraphs discuss several aspects of the present disclosure. According to one aspect of the present disclosure, a quantum computing system is provided, including a quantum computing device that includes a plurality of qubits. The quantum computing system further includes a qubit interface including a readout circuit. The readout circuit is configured to collect a qubit measurement readout of one or more of the plurality of qubits. The qubit measurement readout includes a signal-frequency readout collected at a signal frequency and an idler-frequency readout collected at an idler frequency. The quantum computing system further includes a classical computing device configured to receive the qubit measurement readout from the readout circuit. The classical computing device is further configured to compute a weighted sum based at least in part on the signal-frequency readout and the idler-frequency readout. The classical computing device is further configured to output a combined measurement readout of an observable of the one or more qubits, as indicated by the weighted sum. The above features may have the technical effect of increasing an SNR of the qubit measurement readout.

According to this aspect, the readout circuit may include a traveling-wave parametric amplifier (TWPA) configured to receive a signal tone from the one or more qubits. The TWPA may be further configured to receive a pump tone. The TWPA may be further configured to output the pump tone, a first amplified signal tone, and an idler tone. The above features may have the technical effect of amplifying the signal tone.

According to this aspect, the readout circuit may further include a high-electron-mobility transistor (HEMT) configured to receive the first amplified signal tone and the idler tone from the TWPA. The HEMT may be further configured to output a second amplified signal tone and an amplified idler tone. The above features may have the technical effect of further amplifying the signal tone and the idler tone.

According to this aspect, the readout circuit may further includes a readout instrument configured to receive the second amplified signal tone and the amplified idler tone from the HEMT. The readout instrument may be further configured to compute the signal-frequency readout based at least in part on the second amplified signal tone, compute the idler-frequency readout based at least in part on the amplified idler tone, and output the signal-frequency readout and the idler-frequency readout to the classical computing device. The above features may have the technical effect of obtaining the signal-frequency readout and the idler-frequency readout that are used to compute the combined measurement readout.

According to this aspect, during calibration of the readout circuit, the classical computing device may be further configured to control the readout circuit to sweep over a plurality of pump frequencies of the pump tone while a signal frequency of the signal tone is held fixed. While sweeping over the plurality of pump frequencies, the classical computing device may be further configured to control the readout circuit to measure a signal frequency gain and a signal frequency noise of the readout circuit at the signal frequency. The classical computing device may be further configured to output a selected pump frequency of the plurality of pump frequencies at which the signal frequency gain is approximately maximized or the signal frequency noise is approximately minimized. The above features may have the technical effect of selecting a pump frequency that results in a high SNR, as well as measuring the SNR of the readout circuit at the signal frequency.

According to this aspect, during the calibration of the readout circuit, the classical computing device may be further configured to compute the idler frequency based at least in part on the signal frequency and the selected pump frequency. The classical computing device may be further configured to control the readout circuit to measure an idler frequency gain and an idler frequency noise of the readout circuit at the idler frequency while sweeping over the plurality of pump frequencies. The above features may have the technical effect of measuring the SNR of the readout circuit at the idler frequency.

According to this aspect, the classical computing device may be further configured to compute a signal-frequency signal-to-noise ratio (SNR) based at least in part on the signal frequency gain and the signal frequency noise. The classical computing device may be further configured to compute an idler-frequency SNR based at least in part on the idler frequency gain and the idler frequency noise. The classical computing device may be further configured to compute a weighting factor of the signal-frequency readout and the idler-frequency readout in the weighted sum based at least in part on the signal-frequency SNR and the idler-frequency SNR. The above features may have the technical effect of computing the weighting factor of the signal-frequency readout and the idler-frequency readout in the weighted sum.

According to this aspect, the classical computing device may be configured to compute a scaling prefactor and a phase offset between the signal-frequency readout and the idler-frequency readout. The classical computing device may be further configured to compute a corrected idler frequency readout by applying the scaling prefactor and the phase offset to the idler-frequency readout. The classical computing device may be further configured to compute the weighted sum as a weighted sum of the signal-frequency readout and the corrected idler frequency readout. The above features may have the technical effect of aligning the idler-frequency readout with the signal-frequency readout in amplitude and phase when the weighted sum is computed.

According to this aspect, the classical computing device may be further configured to compute a signal frequency gain of the readout circuit at the signal frequency and compute an idler frequency gain of the readout circuit at the idler frequency. The classical computing device may be further configured to compute the scaling prefactor as a ratio of the signal-frequency gain to the idler-frequency gain. The above features may have the technical effect of computing the scaling prefactor.

According to this aspect, the classical computing device may be further configured to control the readout circuit to collect a plurality of quantum capacitance calibration measurements at a respective plurality of calibration frequencies. The classical computing device may be further configured to compute the phase offset at least in part by performing curve fitting on the quantum capacitance calibration measurements. The above features may have the technical effect of computing the phase offset.

According to this aspect, the readout circuit may be configured to collect the qubit measurement readout via dispersive gate sensing. The above feature may have the technical effect of obtaining the qubit measurement readout.

According to another aspect of the present disclosure, a method for use with a quantum computing system is provided. The method includes, at a qubit interface including a readout circuit, collecting a qubit measurement readout of one or more qubits of a plurality of qubits included in a quantum computing device. The qubit measurement readout includes a signal-frequency readout collected at a signal frequency and an idler-frequency readout collected at an idler frequency. The method further includes, at a classical computing device, receiving the qubit measurement readout from the readout circuit. The method further includes computing a weighted sum based at least in part on the signal-frequency readout and the idler-frequency readout. The method further includes outputting a combined measurement readout of an observable of the one or more qubits, as indicated by the weighted sum. The above features may have the technical effect of increasing an SNR of the qubit measurement readout.

According to this aspect, at a traveling-wave parametric amplifier (TWPA) included in the readout circuit, the method may further include receiving a signal tone from the one or more qubits. At the TWPA, the method may further include receiving a pump tone. At the TWPA, the method may further include outputting the pump tone, a first amplified signal tone, and an idler tone. The above features may have the technical effect of amplifying the signal tone.

According to this aspect, at a high-electron-mobility transistor (HEMT) included in the readout circuit, the method may further include receiving the first amplified signal tone and the idler tone from the TWPA. The method may further include outputting a second amplified signal tone and an amplified idler tone. The above features may have the technical effect of further amplifying the signal tone and the idler tone.

According to this aspect, at a readout instrument included in the readout circuit, the method may further include receiving the second amplified signal tone and the amplified idler tone from the HEMT. The method may further include computing the signal-frequency readout based at least in part on the second amplified signal tone, computing the idler-frequency readout based at least in part on the amplified idler tone, and outputting the signal-frequency readout and the idler-frequency readout to the classical computing device. The above features may have the technical effect of obtaining the signal-frequency readout and the idler-frequency readout that are used to compute the combined measurement readout.

According to this aspect, during calibration of the readout circuit, the method may further include sweeping over a plurality of pump frequencies of the pump tone while a signal frequency of the signal tone is held fixed. While sweeping over the plurality of pump frequencies, the method may further include measuring a signal frequency gain and a signal frequency noise of the readout circuit at the signal frequency. The method may further include outputting a selected pump frequency of the plurality of pump frequencies at which the signal frequency gain is approximately maximized or the signal frequency noise is approximately minimized. The above features may have the technical effect of selecting a pump frequency that results in a high SNR, as well as measuring the SNR of the readout circuit at the signal frequency.

According to this aspect, during the calibration of the readout circuit, the method may further include computing the idler frequency based at least in part on the signal frequency and the selected pump frequency. The method may further include measuring an idler frequency gain and an idler frequency noise of the readout circuit at the idler frequency while sweeping over the plurality of pump frequencies. The above features may have the technical effect of measuring the SNR of the readout circuit at the idler frequency.

According to this aspect, at the classical computing device, the method may further include computing a signal-frequency signal-to-noise ratio (SNR) based at least in part on the signal frequency gain and the signal frequency noise. The method may further include computing an idler-frequency SNR based at least in part on the idler frequency gain and the idler frequency noise. The method may further include computing a weighting factor of the signal-frequency readout and the idler-frequency readout in the weighted sum based at least in part on the signal-frequency SNR and the idler-frequency SNR. The above features may have the technical effect of computing the weighting factor of the signal-frequency readout and the idler-frequency readout in the weighted sum.

According to this aspect, at the classical computing device, the method may further include computing a scaling prefactor and a phase offset between the signal-frequency readout and the idler-frequency readout. The method may further include computing a corrected idler frequency readout by applying the scaling prefactor and the phase offset to the idler-frequency readout. The method may further include computing the weighted sum as a weighted sum of the signal-frequency readout and the corrected idler frequency readout. The above features may have the technical effect of aligning the idler-frequency readout with the signal-frequency readout in amplitude and phase when the weighted sum is computed.

According to another aspect of the present disclosure, a quantum computing system is provided, including a quantum computing device that includes a plurality of qubits. The quantum computing system further includes a qubit interface including a readout circuit. The readout circuit is configured to collect a qubit measurement readout of one or more of the plurality of qubits at least in part by performing dispersive gate sensing on the one or more qubits. The qubit measurement readout includes a signal-frequency readout collected at a signal frequency and an idler-frequency readout collected at an idler frequency. The quantum computing system further includes a classical computing device configured to receive the qubit measurement readout from the readout circuit. The classical computing device is further configured to compute a scaling prefactor and a phase offset between the signal-frequency readout and the idler-frequency readout. The classical computing device is further configured to compute a corrected idler frequency readout by applying the scaling prefactor and the phase offset to the idler-frequency readout. The classical computing device is further configured to compute a weighted sum of the signal-frequency readout and the corrected idler-frequency readout. The classical computing device is further configured to output a combined measurement readout of an observable of the one or more qubits, as indicated by the weighted sum. The above features may have the technical effect of increasing an SNR of the qubit measurement readout.

"And/or" as used herein is defined as the inclusive or V, as specified by the following truth table:

| A | B | AVB |
|---|---|---|
| True | True | True |
| True | False | True |
| False | True | True |
| False | False | False |

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A quantum computing (1) system comprising:
a quantum computing device (10) that includes a plurality of qubits (14);
a qubit interface (34) including a readout circuit (100), wherein:
the readout circuit is configured to collect a qubit measurement readout (40) of one or more of the plurality of qubits; and
the qubit measurement readout includes a signal-frequency readout (42) collected at a signal frequency (*fₛ*) and an idler-frequency readout (44) collected at an idler frequency (*fᵢ*); and
a classical computing device (18) configured to:
receive the qubit measurement readout from the readout circuit;
compute a weighted sum (50) based at least in part on the signal-frequency readout and the idler-frequency readout; and
output a combined measurement readout of an observable (52) of the one or more qubits, as indicated by the weighted sum.

2. The quantum computing system of claim 1, wherein the readout circuit includes a traveling-wave parametric amplifier, TWPA, configured to:
receive a signal tone from the one or more qubits;
receive a pump tone; and
output the pump tone, a first amplified signal tone, and an idler tone.

3. The quantum computing system of claim 2, wherein the readout circuit further includes a high-electron-mobility transistor, HEMT, configured to:
receive the first amplified signal tone and the idler tone from the TWPA; and
output a second amplified signal tone and an amplified idler tone;
optionally wherein the readout circuit further includes a readout instrument configured to:
receive the second amplified signal tone and the amplified idler tone from the HEMT;
compute the signal-frequency readout based at least in part on the second amplified signal tone;
compute the idler-frequency readout based at least in part on the amplified idler tone; and
output the signal-frequency readout and the idler-frequency readout to the classical computing device.

4. The quantum computing system of claim 2 or claim 3, wherein, during calibration of the readout circuit, the classical computing device is further configured to:
control the readout circuit to:
sweep over a plurality of pump frequencies of the pump tone while a signal frequency of the signal tone is held fixed; and
while sweeping over the plurality of pump frequencies, measure a signal frequency gain and a signal frequency noise of the readout circuit at the signal frequency; and
output a selected pump frequency of the plurality of pump frequencies at which the signal frequency gain is approximately maximized or the signal frequency noise is approximately minimized.

5. The quantum computing system of claim 4, wherein, during the calibration of the readout circuit, the classical computing device is further configured to:
compute the idler frequency based at least in part on the signal frequency and the selected pump frequency; and
control the readout circuit to measure an idler frequency gain and an idler frequency noise of the readout circuit at the idler frequency while sweeping over the plurality of pump frequencies;
optionally wherein, the classical computing device is further configured to:
compute a signal-frequency signal-to-noise ratio, SNR, based at least in part on the signal frequency gain and the signal frequency noise;
compute an idler-frequency SNR based at least in part on the idler frequency gain and the idler frequency noise; and
compute a weighting factor of the signal-frequency readout and the idler-frequency readout in the weighted sum based at least in part on the signal-frequency SNR and the idler-frequency SNR.

6. The quantum computing system of any of claims 2 to 5, wherein the classical computing device is configured to:
compute a scaling prefactor and a phase offset between the signal-frequency readout and the idler-frequency readout;
compute a corrected idler frequency readout by applying the scaling prefactor and the phase offset to the idler-frequency readout; and
compute the weighted sum as a weighted sum of the signal-frequency readout and the corrected idler frequency readout;
optionally wherein the classical computing device is further configured to:
compute a signal frequency gain of the readout circuit at the signal frequency;
compute an idler frequency gain of the readout circuit at the idler frequency; and
compute the scaling prefactor as a ratio of the signal-frequency gain to the idler-frequency gain.

7. The quantum computing system of claim 6, wherein the classical computing device is further configured to:
control the readout circuit to collect a plurality of quantum capacitance calibration measurements at a respective plurality of calibration frequencies; and
compute the phase offset at least in part by performing curve fitting on the quantum capacitance calibration measurements.

8. The quantum computing system of any preceding claim, wherein the readout circuit is configured to collect the qubit measurement readout via dispersive gate sensing.

9. A method (200) for use with a quantum computing system, the method comprising:
at a qubit interface including a readout circuit, collecting a qubit measurement readout of one or more qubits of a plurality of qubits included in a quantum computing device, wherein the qubit measurement readout includes a signal-frequency readout collected at a signal frequency and an idler-frequency readout collected at an idler frequency (202); and
at a classical computing device:
receiving the qubit measurement readout from the readout circuit (204);
computing a weighted sum based at least in part on the signal-frequency readout and the idler-frequency readout (206); and
outputting a combined measurement readout of an observable of the one or more qubits, as indicated by the weighted sum (208).

10. The method of claim 9, further comprising, at a traveling-wave parametric amplifier, TWPA, included in the readout circuit:
receiving a signal tone from the one or more qubits;
receiving a pump tone; and
outputting the pump tone, a first amplified signal tone, and an idler tone.

11. The method of claim 10, further comprising, at a high-electron-mobility transistor, HEMT, included in the readout circuit:
receiving the first amplified signal tone and the idler tone from the TWPA; and
outputting a second amplified signal tone and an amplified idler tone;
optionally wherein the method further comprises, at a readout instrument included in the readout circuit:
receiving the second amplified signal tone and the amplified idler tone from the HEMT;
computing the signal-frequency readout based at least in part on the second amplified signal tone;
computing the idler-frequency readout based at least in part on the amplified idler tone; and
outputting the signal-frequency readout and the idler-frequency readout to the classical computing device.

12. The method of claim 10 or claim 11, further comprising, during calibration of the readout circuit:
sweeping over a plurality of pump frequencies of the pump tone while a signal frequency of the signal tone is held fixed;
while sweeping over the plurality of pump frequencies, measuring a signal frequency gain and a signal frequency noise of the readout circuit at the signal frequency; and
outputting a selected pump frequency of the plurality of pump frequencies at which the signal frequency gain is approximately maximized or the signal frequency noise is approximately minimized.

13. The method of claim 12, further comprising, during the calibration of the readout circuit:
computing the idler frequency based at least in part on the signal frequency and the selected pump frequency; and
measuring an idler frequency gain and an idler frequency noise of the readout circuit at the idler frequency while sweeping over the plurality of pump frequencies.

14. The method of claim 13, further comprising, at the classical computing device:
computing a signal-frequency signal-to-noise ratio, SNR, based at least in part on the signal frequency gain and the signal frequency noise;
computing an idler-frequency SNR based at least in part on the idler frequency gain and the idler frequency noise; and
computing a weighting factor of the signal-frequency readout and the idler-frequency readout in the weighted sum based at least in part on the signal-frequency SNR and the idler-frequency SNR.

15. The method of any of claims 9 to 14, further comprising, at the classical computing device:
computing a scaling prefactor and a phase offset between the signal-frequency readout and the idler-frequency readout;
computing a corrected idler frequency readout by applying the scaling prefactor and the phase offset to the idler-frequency readout; and
computing the weighted sum as a weighted sum of the signal-frequency readout and the corrected idler frequency readout.
